# FASCICULE DE BREVET EUROPEEN

(11) **EP 2 210 782 B1**
(45) Date de publication et mention de la délivrance du brevet: **20.06.2012**
(21) Numéro de dépôt: 10305064.7
(22) Date de dépôt: 20.01.2010
(51) Int. Cl.: B60R 13/02, B60R 21/04

(54) **Panneau d'habillage d'une porte latérale de véhicule et porte de véhicule ainsi équipée**
Verkleidungspaneel einer Seitentür eines Fahrzeugs und so ausgestattete Fahrzeugtür
Trim panel for a side door of a vehicle and vehicle door thus equipped

(30) Priorité: 26.01.2009 FR 0950462
(43) Date de publication de la demande: 28.07.2010
(73) Titulaire: Renault S.A.S., 92100 Boulogne-Billancourt (FR)
(72) Inventeur: Guerlin, Philippe, 91540, Mennecy (FR); Hudry, Efflam, 75013, PARIS (FR); Massa, Xavier, 95110, SANNOIS (FR)

(56) Documents cités:
- EP-A- 1 197 366
- EP-A- 1 748 199
- US-A- 5 482 344
- US-B1- 6 185 872

## Description

La présente invention concerne un panneau d'habillage d'une porte latérale de véhicule, et une porte de véhicule ainsi équipée.

On sait que les panneaux d'habillage des portes latérales des véhicules automobiles sont généralement formés en une seule pièce.

Néanmoins, certaines configurations de vitres de portes de véhicule ne se prêtent pas à l'habillage de la porte par un panneau d'habillage monobloc. Pour remédier à ce problème, on est amené à concevoir des panneaux de garniture de porte en deux ou plusieurs parties. Un tel panneau d'habillage selon le préambule de la revendication 1 est connu du document EP-A-1 197 366. Néanmoins, de tels panneaux sont soumis à un risque d'éclatement vers le passager en cas de choc latéral contre la porte.

L'invention vise à remédier à cet inconvénient et propose un panneau d'habillage destiné à une porte latérale de véhicule, ledit panneau d'habillage comportant au moins un premier panneau de garniture inférieur et un second panneau de garniture supérieur adjacent audit premier panneau de garniture inférieur, caractérisé en e que ledit panneau de garniture supérieur comporte un moyen de fixation apte à permettre à celui-ci de s'écarter légèrement à un choc latéral contre la porte, tout en absorbant l'énergie de choc.

Au choc, ce panneau de garniture supérieur s'écarte légèrement de la porte et n'éclate pas.

Ledit panneau de garniture supérieur peut être fixé à la porte au moyen d'éléments de fixation ponctuels par vis, agrafes ou clips, par exemple, et au moyen d'au moins une liaison par un élément en saillie de la porte monté traversant dans un trou oblong du panneau dans une zone du panneau susceptible de s'écarter de la porte à un choc latéral contre celle-ci, la liaison du trou oblong du panneau relativement à l'élément en saillie étant apte à permettre une dissipation de l'énergie du choc latéral par déplacement ou allongement de la liaison.

Le trou oblong est avantageusement conformé avec son élongation dans la direction verticale de manière à permettre le déplacement du trou oblong relativement à l'élément en saillie dans un sens correspondant à l'écartement et/ou soulèvement vers le haut du panneau de garniture supérieur de la porte, au choc latéral.

La liaison du trou oblong relativement à l'élément en saillie est de préférence une liaison serrée, dont l'adhérence est à un coefficient de frottement déterminé, pour permettre le déplacement en glissement de la liaison au choc latéral et ainsi l'absorption d'une quantité d'énergie de choc déterminée.

L'élément en saillie peut être une vis fixée à la porte et montée serrée sur le trou oblong.

Ledit trou oblong peut être disposé au bord inférieur du panneau.

Le panneau de garniture supérieur et le panneau de garniture inférieur peuvent être reliés ensemble à leur bord en regard au moyen dudit élément en saillie et d'autres points de fixation à leur bord.

Naturellement, ladite liaison peut être une zone de fixation ou un point de fixation.

Ladite liaison par l'élément en saillie et le trou oblong est avantageusement un point de fixation positionné au niveau central de la porte et les autres points de fixation (simples, par vis, clip ou autre) peuvent être régulièrement répartis sur le bord de panneau.

Les panneaux supérieur et inférieur peuvent être disposés en chevauchement au niveau de leurs points de fixation communs.

Ledit trou oblong peut encore être disposé sur une patte inférieure en saillie du panneau supérieur, laquelle est de préférence apte à être introduite et dissimulée dans une ouverture complémentaire du panneau de garniture inférieur, l'élément en saillie étant apte à former un élément commun de fixation du panneau de garniture supérieur et du panneau de garniture inférieur à la porte.

Ladite patte peut être issue de moulage en matière plastique avec le panneau de garniture, matière plastique relativement dure, polypropylène par exemple.

Le trou oblong peut être pourvu d'une rondelle de serrage à coefficient de frottement déterminé et la course de déplacement ΔL de l'élément en saillie sur le trou oblong peut être d'une longueur déterminée de 0 à 20 mm, de préférence de 10 à 15 mm, propre à permettre, lors d'un choc latéral sur la porte, une absorption d'une quantité d'énergie déterminée.

Naturellement, l'invention concerne également une porte latérale de véhicule et un véhicule équipés d'un panneau d'habillage de porte tel que défini ci-dessus.

L'invention est illustrée ci-après à l'aide d'un exemple de réalisation décrit en référence aux dessins annexés, sur lesquels :
La figure 1 est une vue en perspective d'un panneau d'habillage d'une porte latérale d'un véhicule automobile selon l'invention, et
La figure 2 est une vue en coupe transversale schématique au niveau de ladite liaison de fixation du panneau supérieur d'une porte pourvue d'un panneau d'habillage selon la figure 1.

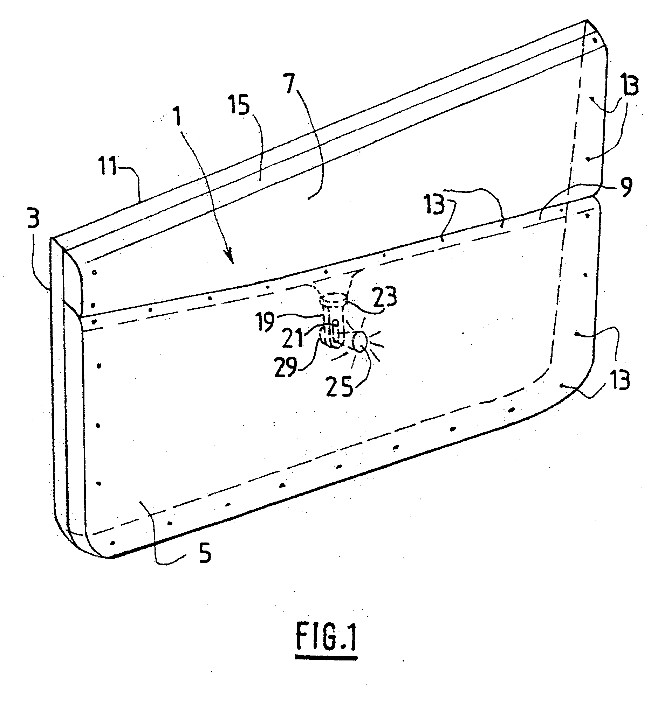

Avec référence aux dessins, en particulier à la figure 1, on a représenté un panneau d'habillage 1 selon l'invention d'une porte latérale 3 de véhicule automobile. Ce panneau d'habillage 1 revêt la partie interne de la porte 3 tournée vers l'habitacle du véhicule. Il comporte un panneau de garniture inférieur 5 et un panneau de garniture supérieur 7. Ces panneaux sont disposés adjacents l'un à l'autre selon un bord 9 en chevauchement sensiblement médian de la porte 3.

Ces panneaux de garniture 5 et 7 sont fixés à la porte 3, plus précisément au caisson de porte externe 11, au moyen de points de fixation 13 par vis, agrafes ou clips classiques, régulièrement répartis à leur périphérie.

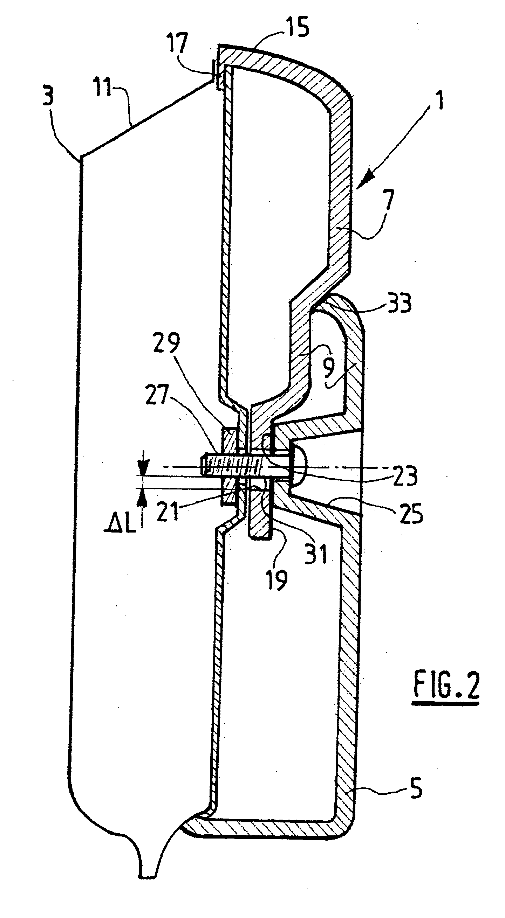

Le panneau supérieur 7 est en outre suspendu (figure 2) par son bord supérieur 15 à la feuillure supérieure 17 horizontale de caisson 11. Il comporte en outre à son bord sensiblement horizontal inférieur 9 une patte 19 formant saillie vers le bas et disposée sensiblement au niveau médian de la longueur du bord 9.

Cette patte 19 est issue de moulage en matière plastique avec le panneau 7, en polypropylène. Elle comporte à sa partie inférieure un trou 21 oblong dans la direction verticale. La patte 19 est montée (dissimulée) dans un trou de passage complémentaire inférieur 23 du panneau 5 et est appliquée contre un puits de vissage 25 du panneau de garniture inférieur 5. Elle est fixée serrée au moyen d'une vis 27 montée dans le puits de vissage 25 et le trou oblong 21, et en prise avec un écrou 29 solidarisé au caisson ou à la doublure de porte 11.

Au montage, le trou oblong 21 dépasse vers le bas du corps 31 de la vis d'une profondeur ΔL correspondant à la marge de glissement de la liaison de la vis au trou oblong, allant de 10 à 15 mm. La vis 27 est serrée rigidement au caisson de porte, environ à un couple de 80 N/m, et en cas de choc latéral sur la porte 3, à une vitesse normalisée inférieure à 65 km/h, cette liaison est susceptible de s'allonger, la patte 19 glissant relativement à la vis 27, par son trou oblong 21, jusqu'à ce que la vis 27 vienne au fond du trou oblong 21. Dans ce glissement, la liaison absorbe en un bref instant l'énergie du choc et évite que le panneau 7 n'éclate vers l'intérieur de l'habitacle avec le risque de blesser les occupants du véhicule par projection sur ceux-ci.

Naturellement, les autres points de liaison 13 peuvent céder au choc mais la patte 19, au niveau central de la porte 3, retient le bord inférieur 9 du panneau de garniture 7, ce dernier en suspension sur le bord supérieur de feuillure 17 du caisson ayant tendance à tourner autour de ce bord et donc à s'écarter du caisson de porte 11 par son bord inférieur 9. Si le panneau éclatait, en s'écartant violemment vers le passager en regard, il pourrait le blesser.

Par ailleurs, le panneau de garniture inférieur 5 n'est pas affecté par le choc latéral comme le panneau de garniture supérieur 7 et il accompagne la déformation du caisson 11.

Le montage du panneau d'habillage 1 sur le caisson de porte est à présent décrit. On monte tout d'abord le panneau de garniture inférieur 5 sur le caisson de porte 11, par exemple en le clippant dans sa partie basse et en le vissant en partie haute sur ses points de fixation 13 au caisson. On monte ensuite le panneau de garniture supérieur 7. Celui-ci est glissé vers le bas sur le bord supérieur du panneau inférieur, la patte 19 à trou oblong glissant sur le puits de serrage 25 par le trou de passage 23 du panneau inférieur 5. Le panneau 7 se positionne alors dans son mouvement de glissement vers le bas en butée relativement au panneau inférieur 5, selon des points de butée adéquats 33, par exemple le bord supérieur du panneau 5 contre un pan incliné du panneau 7. Le trou oblong 21 de la patte est alors convenablement positionné relativement à la vis de serrage 27, comprenant la partie à marge de glissement ΔL sous celle-ci. La vis 27 peut alors être serrée relativement au caisson et les autres points de fixation 13 du panneau de garniture supérieur être engagés ensuite sur le caisson de porte, par exemple par clips ou par vis.

Le panneau d'habillage l de la porte selon l'invention est à présent monté.

Des variantes de réalisation de l'invention peuvent être réalisées dans le cadre de l'invention.

Ainsi, on peut prévoir plusieurs pattes de fixation à trou oblong sur les zones de fixation du panneau sujettes à déformation et écartement du panneau au caisson, lesquelles peuvent combiner déplacement du trou oblong relativement à la vis de serrage, puis une déchirure progressive de la patte, vis en fond du trou, ce qui renforce pour des chocs latéraux importants l'absorption de l'énergie due au choc.

## Revendications

1. Panneau d'habillage (1) destiné à une porte latérale (3) de véhicule, ledit panneau d'habillage (1) comportant au moins un premier panneau de garniture inférieur (5) et un second panneau de garniture supérieur (7) adjacent audit premier panneau de garniture inférieur (5), **caractérisé en ce que** ledit panneau de garniture supérieur (7) comporte un moyen de fixation (21, 27) apte à permettre à celui-ci de s'écarter légèrement à un choc latéral contre la porte (3), tout en absorbant l'énergie de choc.

2. Panneau d'habillage selon la revendication 1, **caractérisé en ce que** ledit panneau de garniture supérieur (7) est fixé à la porte (3) au moyen d'éléments de fixation ponctuels (13), et au moyen d'au moins une liaison par un élément en saillie (27) de la porte (3) monté traversant dans un trou oblong (21) du panneau (7) dans une zone du panneau susceptible de s'écarter de la porte à un choc latéral contre celle-ci, la liaison du trou oblong (21) du panneau (7) relativement à l'élément en saillie (27) étant apte à permettre une dissipation de l'énergie du choc latéral par déplacement ou allongement de la liaison.

3. Panneau d'habillage selon la revendication 1 ou 2, **caractérisé en ce que** la liaison du trou oblong (21) relativement à l'élément en saillie (27) est une liaison serrée, dont l'adhérence est à un coefficient de frottement déterminé.

4. Panneau d'habillage selon la revendication 3, caractérise encre que l'élément en saillie (27) est une vis (27) fixée à la porte (3) et montée serrée sur le trou oblong (21).

5. Panneau d'habillage selon l'une quelconque des revendications précédentes, **caractérisé en ce que** ledit trou oblong (21), est disposé au bord inférieur (9) du panneau (7).

6. Vanneau d'habillage selon l'une des revendications précédentes, **caractérisé en ce que** le panneau de garniture supérieur (7) et le panneau de garniture inférieur (5) sont reliés ensemble à leur bord en regard (9) au moyen de ladite liaison du trou oblong (21) et de l'élément en saillie (27) et au moyen desdites autres points de fixation (13), à leur bord (9).

7. Panneau d'habillage selon l'une des revendications précédentes, **caractérisé en ce que** ladite liaison de l'élément en saillie (27) et du trou oblong (21) est un point de fixation positionné au niveau central de la porte (13) et les autres points de fixation (13) sont régulièrement répartis sur le bord (9) de panneau.

8. Panneau d'habillage selon l'une quelconque des revendications précédentes, **caractérisé en ce que** ledit trou oblong (21) est disposé sur une patte inférieure (19) en saillie du panneau supérieur (7), laquelle est de préférence apte à être introduite et dissimulée dans une ouverture complémentaire (23) du panneau inférieur (5), l'élément en saillie (27) étant apte à former un élément commun de fixation du panneau de garniture supérieur (7) et du panneau de garniture inférieur (5) à la porte (3).

9. Panneau d'habillage selon l'une quelconque des revendications précédentes, **caractérisé en ce que** le trou oblong (21) est pourvu d'une rondelle de serrage à coefficient de frottement déterminé et la course de déplacement (ΔL) de l'élément en saillie (27) sur le trou oblong (21) est d'une longueur déterminée, propre à permettre, lors d'un choc latéral sur la porte (3), une absorption d'une quantité d'énergie déterminée.

10. Porte latérale (3) de véhicule équipée d'un panneau d'habillage (1) selon l'une quelconque des revendications précédentes.

## Claims

1. Trim panel (1) intended for a side door (3) of a vehicle, said trim panel (1) comprising at least one first, lower liner panel (5) and one second, upper liner panel (7) adjacent to said first, lower liner panel (5), **characterized in that** said upper liner panel (7) comprises a fastening means (21, 27) designed to allow the latter panel to separate slightly in the event of a side impact against the door (3), while absorbing the impact energy.

2. Trim panel according to Claim 1, **characterized in that** said upper liner panel (7) is fastened to the door (3) by means of discrete fastening elements (13), and by means of at least one connection provided by a projecting element (27) of the door (3) that is mounted so as to pass through an oblong hole (21) in the panel (7) in a panel region capable of separating from the door in the event of a side impact against the latter, the connection of the oblong hole (21) in the panel (7) relative to the projecting element (27) being designed to allow a dissipation of the energy of the side impact through displacement or elongation of the connection.

3. Trim panel according to Claim 1 or 2, **characterized in that** the connection of the oblong hole (21) relative to the projecting element (27) is a tight connection, the grip provided by which has a predetermined coefficient of friction.

4. Trim panel according to Claim 3, **characterized in that** the projecting element (27) is a screw (27) fastened to the door (3) and mounted tightly across the oblong hole (21).

5. Trim panel according to any one of the preceding claims, **characterized in that** said oblong hole (21) is arranged at the lower edge (9) of the panel (7).

6. Trim panel according to one of the preceding claims, **characterized in that** the upper liner panel (7) and the lower liner panel (5) are connected together at their opposite edges (9) by means of said connection formed by the oblong hole (21) and the projecting element (27) and by means of said other fastening points (13), at their edges (9).

7. Trim panel according to one of the preceding claims, **characterized in that** said connection formed by the projecting element (27) and the oblong hole (21) is a fastening point positioned at the central level of the door (13), and the other fastening points (13) are uniformly distributed over the panel edge (9).

8. Trim panel according to any one of the preceding claims, **characterized in that** said oblong hole (21) is arranged in a projecting lower tab (19) of the upper panel (7), which tab is preferably designed to be inserted and concealed in a complementary opening (23) in the lower panel (5), the projecting element (27) being designed to form a common fastening element for fastening the upper liner panel (7) and the lower liner panel (5) to the door (3).

9. Trim panel according to any one of the preceding claims, **characterized in that** the oblong hole (21) is provided with a clamping washer having a predetermined coefficient of friction, and the displacement travel (ΔL) of the projecting element (27) in the oblong hole (21) is of a predetermined length, designed to allow, during a side impact against the door (3), an absorption of a predetermined quantity of energy.

10. Vehicle side door (3) equipped with a trim panel (1) according to any one of the preceding claims.

## Patentansprüche

1. Verkleidungsplatte (1), die für eine Fahrzeug-Seitentür (3) bestimmt ist, wobei die Verkleidungsplatte (1) mindestens eine erste untere Auskleidungsplatte (5) und eine der ersten unteren Auskleidungsplatte (5) benachbarte zweite obere Auskleidungsplatte (7) aufweist, **dadurch gekennzeichnet, dass** die obere Auskleidungsplatte (7) eine Befestigungseinrichtung (21, 27) aufweist, die es ihr erlaubt, sich bei einem seitlichen Stoß gegen die Tür (3) leicht zu entfernen und dabei die Stoßenergie zu absorbieren.

2. Verkleidungsplatte nach Anspruch 1, **dadurch gekennzeichnet, dass** die obere Auskleidungsplatte (7) an der Tür (3) mittels punktweiser Befestigungselemente (13) und mittels mindestens einer Verbindung durch ein vorstehendes Element (27) der Tür (3) befestigt ist, das durchquerend in ein Langloch (21) der Platte (7) in einer Zone der Platte montiert ist, die sich bei einem seitlichen Stoß gegen die Tür von dieser entfernen kann, wobei die Verbindung des Langlochs (21) der Platte (7) bezüglich des vorstehenden Elements (27) eine Ableitung der Energie des seitlichen Stoßes durch Verschiebung oder Verlängerung der Verbindung erlauben kann.

3. Verkleidungsplatte nach Anspruch 1 oder 2, **dadurch gekennzeichnet, dass** die Verbindung des Langlochs (21) bezüglich des vorstehenden Elements (27) eine Klemmverbindung ist, deren Haftung einen bestimmten Reibungskoeffizient hat.

4. Verkleidungsplatte nach Anspruch 3, **dadurch gekennzeichnet, dass** das vorstehende Element (27) eine Schraube (27) ist, die an der Tür (3) befestigt und auf das Langloch (21) angezogen montiert ist.

5. Verkleidungsplatte nach einem der vorhergehenden Ansprüche, **dadurch gekennzeichnet, dass** das Langloch (21) am unteren Rand (9) der Platte (7) angeordnet ist.

6. Verkleidungsplatte nach einem der vorhergehenden Ansprüche, **dadurch gekennzeichnet, dass** die obere Auskleidungsplatte (7) und die untere Auskleidungsplatte (5) an ihrem gegenüberliegenden Rand (9) mittels der Verbindung des Langlochs (21) und des vorstehenden Elements (27) und mittels der anderen Befestigungspunkte (13) an ihrem Rand (9) miteinander verbunden sind.

7. Verkleidungsplatte nach einem der vorhergehenden Ansprüche, **dadurch gekennzeichnet, dass** die Verbindung des vorstehenden Elements (27) und des Langlochs (21) ein Befestigungspunkt ist, der im mittleren Bereich der Tür (13) positioniert ist, und die anderen Befestigungspunkte (13) gleichmäßig auf dem Rand (9) der Platte verteilt sind.

8. Verkleidungsplatte nach einem der vorhergehenden Ansprüche, **dadurch gekennzeichnet, dass** das Langloch (21) auf einer von der oberen Platte (7) vorstehenden unteren Lasche (19) angeordnet ist, die vorzugsweise in eine komplementäre Öffnung (23) der unteren Platte (5) eingefügt und verdeckt werden kann, wobei das vorstehende Element (27) ein gemeinsames Befestigungselement der oberen Auskleidungsplatte (7) und der unteren Auskleidungsplatte (5) an der Tür (3) bilden kann.

9. Verkleidungsplatte nach einem der vorhergehenden Ansprüche, **dadurch gekennzeichnet, dass** das Langloch (21) mit einer Klemmscheibe mit bestimmtem Reibungskoeffizient versehen ist, und der Verschiebungshub (ΔL) des vorstehenden Elements (27) auf dem Langloch (21) eine bestimmte Länge hat, die bei einem seitlichen Stoß auf die Tür (3) eine Absorption einer bestimmten Energiemenge erlauben kann.

10. Fahrzeug-Seitentür (3), die mit einer Verkleidungsplatte (1) nach einem der vorhergehenden Ansprüche ausgestattet ist.
